(19) **Europäisches Patentamt / European Patent Office / Office européen des brevets**

(11) **EP 4 668 608 A1**

(12) **EUROPEAN PATENT APPLICATION**
published in accordance with Art. 153(4) EPC

(43) Date of publication:
**24.12.2025 Bulletin 2025/52**

(21) Application number: **24757201.9**

(22) Date of filing: **14.02.2024**

(51) International Patent Classification (IPC):
*H04B 7/06* (2006.01)     *H04W 76/14* (2018.01)
*H04W 24/08* (2009.01)     *H04L 5/00* (2006.01)
*H04W 92/18* (2009.01)

(52) Cooperative Patent Classification (CPC):
**H04B 7/06; H04L 5/00; H04W 24/08; H04W 76/14; H04W 92/18**

(86) International application number:
**PCT/KR2024/002073**

(87) International publication number:
**WO 2024/172478 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  14.02.2023  KR 20230019283
16.02.2023  US 202363446350 P
06.04.2023  KR 20230045644
09.05.2023  KR 20230060026
17.05.2023  US 202363467290 P
18.07.2023  KR 20230093143

(71) Applicant: **LG Electronics Inc.**
**Yeongdeungpo-gu**
**Seoul 07336 (KR)**

(72) Inventors:
• **HWANG, Daesung**
**Seoul 06772 (KR)**
• **LEE, Seungmin**
**Seoul 06772 (KR)**
• **PARK, Hanjun**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING AND RECEIVING PLURALITY OF REFERENCE SIGNALS**

(57)     Provided are a method by which a first device performs wireless communication and an apparatus for supporting same. The method may comprise the steps of: obtaining information related to a set of slots in which a plurality of transmission spatial settings are allowed; and transmitting a plurality of reference signals on the basis of the plurality of transmission spatial settings on a slot in the set of slots.

FIG. 13

obtaining information related to set of slots in which multiple transmission spatial settings are allowed — S1310

transmitting, based on multiple transmission spatial settings, reference signals on slot within set of slots — S1320

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

Based on an embodiment of the present disclosure, a method for performing wireless communication by a first device may be provided. For example, the method may comprise: obtaining information related to a set of slots in which multiple transmission spatial settings are allowed; and transmitting, based on the multiple transmission spatial settings, a plurality of reference signals on a slot within the set of slots. For example, the first device may be allowed to transmit the plurality of reference signals on the slot within the set of slots based on the multiple transmission spatial settings.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: obtaining information related to a set of slots in which multiple transmission spatial settings are allowed; and transmitting, based on the multiple transmission spatial settings, a plurality of reference signals on a slot within the set of slots. For example, the first device may be allowed to transmit the plurality of reference signals on the slot within the set of slots based on the multiple transmission spatial settings.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: obtaining information related to a set of slots in which multiple transmission spatial settings are allowed; and transmitting, based on the multiple transmission spatial settings, a plurality of reference signals on a slot within the set of slots. For example, the first device may be allowed to transmit the plurality of reference signals on the slot within the set of slots based on the multiple transmission spatial settings.

Based on an embodiment of the present disclosure, a non-transitory computer-readable storage medium storing instructions may be provided. For example, the instructions, when executed, may cause a first device to perform operations comprising: obtaining information related to a set of slots in which multiple transmission spatial settings are allowed; and transmitting, based on the multiple transmission spatial settings, a plurality of reference signals on a slot within the set of slots. For example, the first device may be allowed to transmit the plurality of reference signals on the slot within the set of slots based on the multiple transmission spatial settings.

BRIEF DESCRIPTION OF THE DRAWINGS

FIG. 1 shows a communication structure providable in a 6G system, based on an embodiment of the present disclosure.

FIG. 2 shows an electromagnetic spectrum, based on an embodiment of the present disclosure.

FIG. 3 shows an example of an NTN typical scenario based on a transparent payload, based on an embodiment of the present disclosure.

FIG. 4 shows an example of an NTN typical scenario based on a regenerative payload, based on an embodiment of the present disclosure.

FIG. 5 shows an example of a sensing operation, based on an embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows a resource unit for CBR measurement, based on an embodiment of the present disclosure.

FIG. 10 shows beam management based on an embodiment of the present disclosure.

FIG. 11 shows an example of an AGC problem caused by transmission of reference signals for beam management.

FIG. 12 shows an example of a set of slots in which SL RS for beam management using different TX spatial settings is allowed or can be transmitted in the same slot, based on an embodiment of the present disclosure.

FIG. 13 shows a method for a first device to perform wireless communication, based on an embodiment of the present disclosure.

FIG. 14 shows a method for a second device to perform wireless communication, based on an embodiment of the present disclosure.

FIG. 15 shows a communication system 1, based on an embodiment of the present disclosure.

FIG. 16 shows wireless devices, based on an embodiment of the present disclosure.

FIG. 17 shows a signal process circuit for a transmission signal, based on an embodiment of the present disclosure.

FIG. 18 shows another example of a wireless device, based on an embodiment of the present disclosure.

FIG. 19 shows a hand-held device, based on an embodiment of the present disclosure.

FIG. 20 shows a vehicle or an autonomous vehicle, based on an embodiment of the present disclosure.

## MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

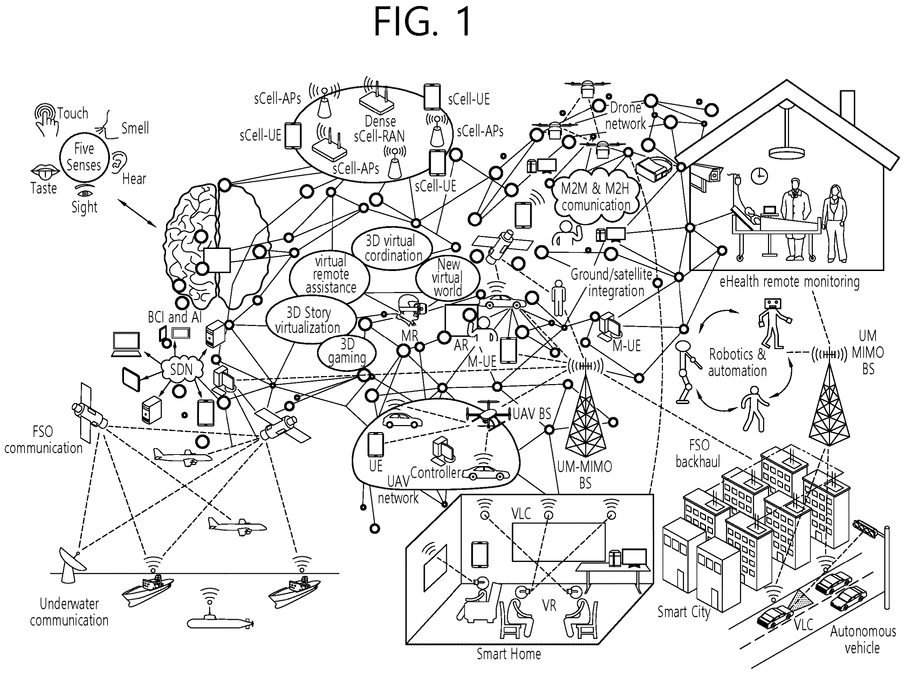

FIG. 1 shows a communication structure providable in a 6G system, based on an embodiment of the present disclosure. The embodiment of FIG. 1 may be combined with various embodiments of the present disclosure.

In 6G, new network characteristics may be as follows.

- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.

- Small cell networks
- Ultra-dense heterogeneous network
- High-capacity backhaul

- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.

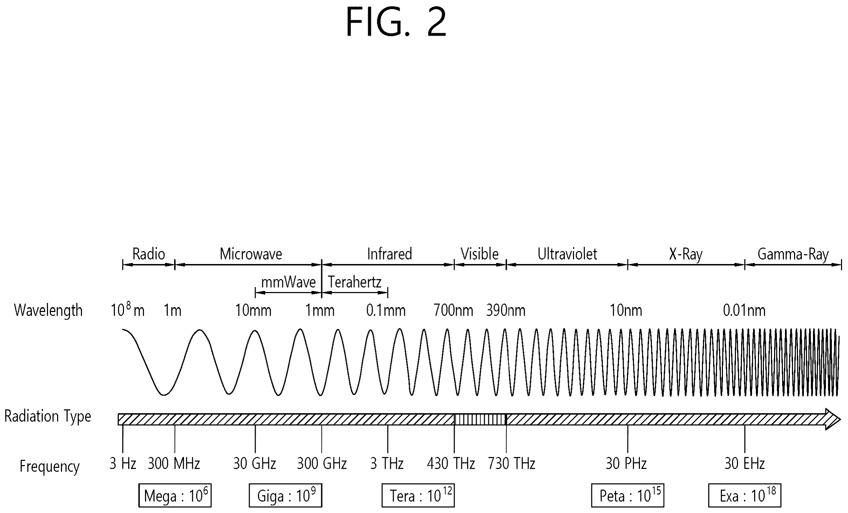

- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.

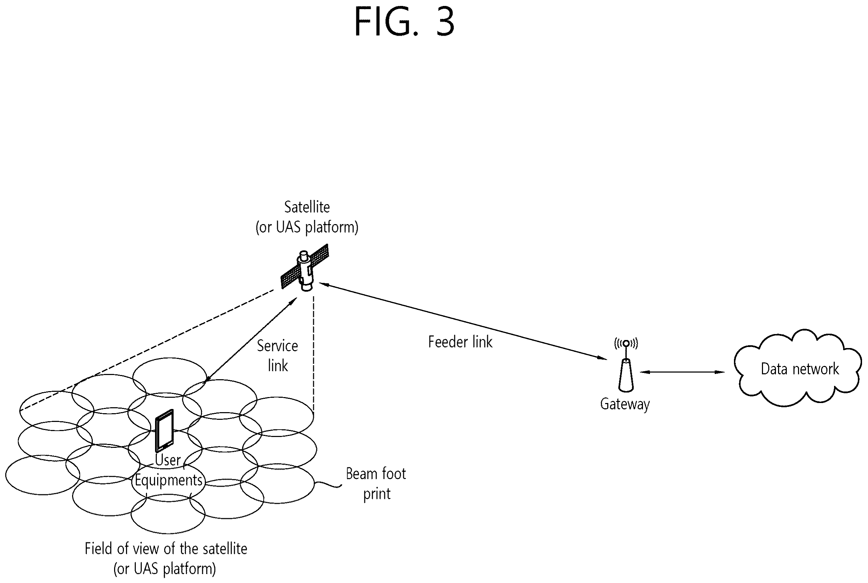

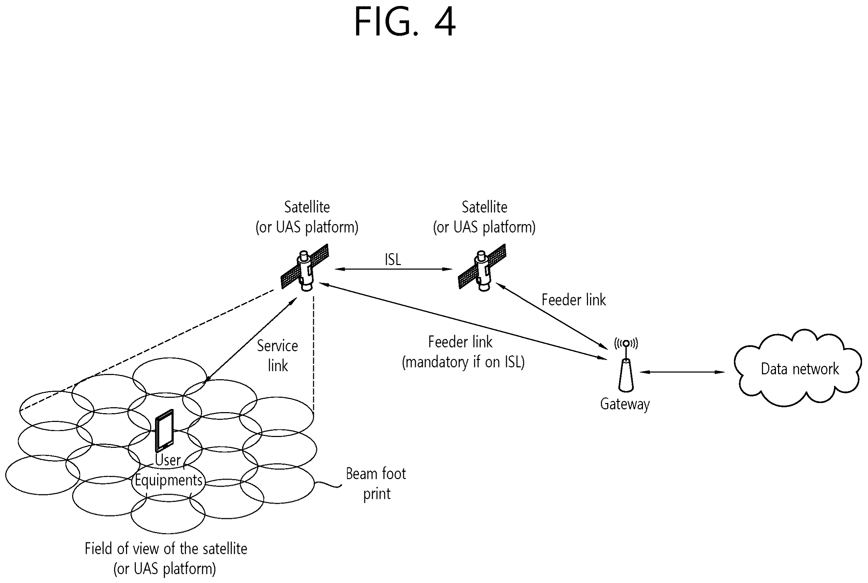

- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.

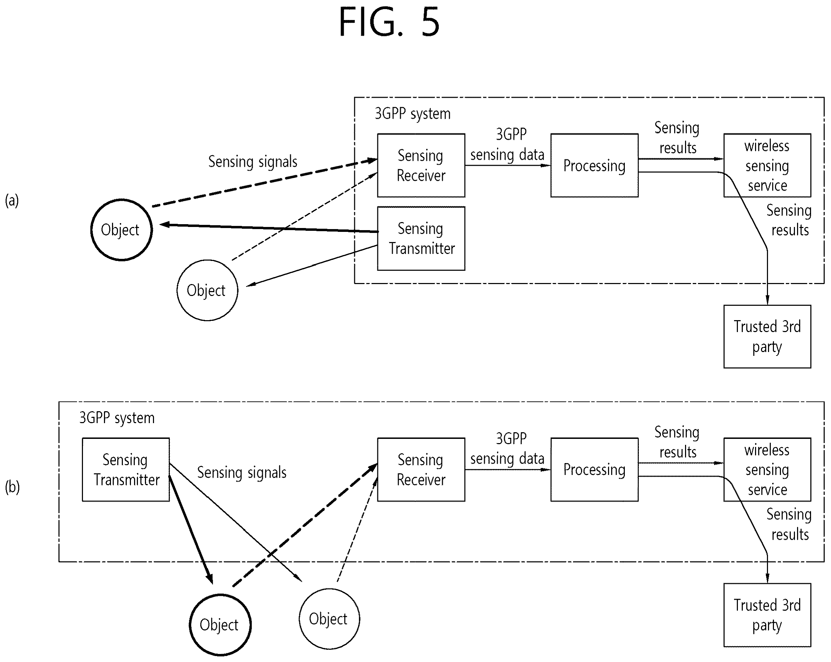

- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP or an extended CP is used.

[Table 2]

| CP type | SCS ($15*2^u$) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

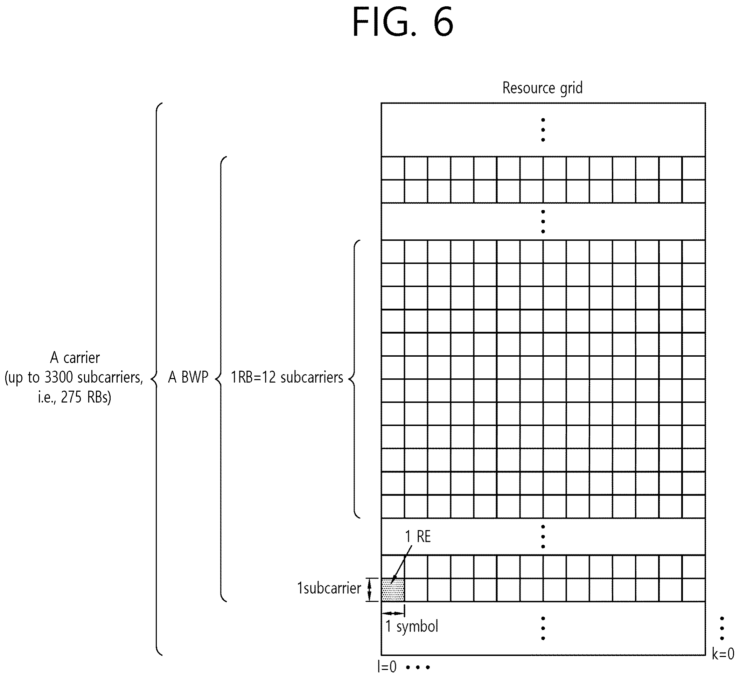

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

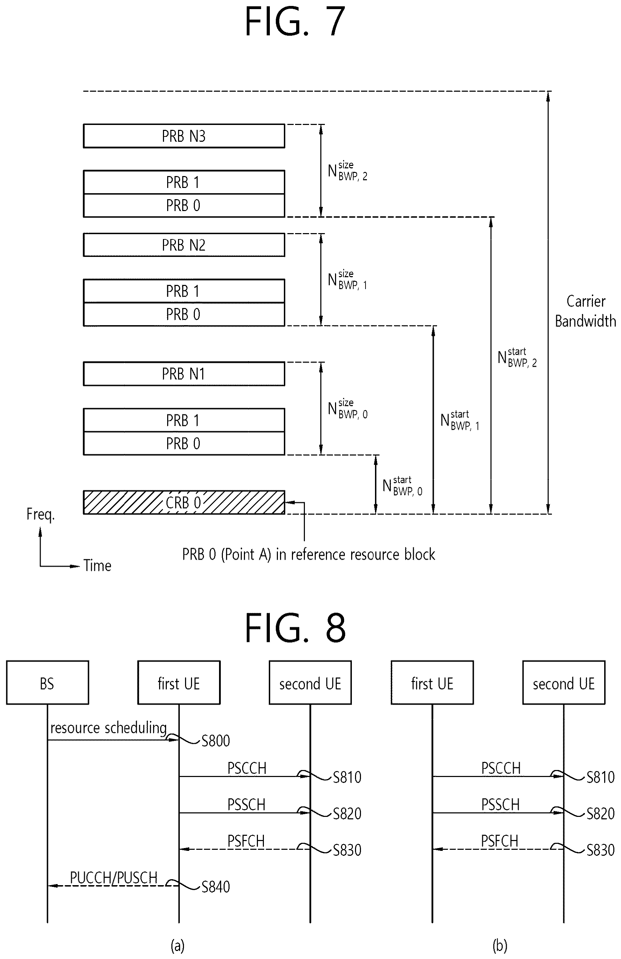

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or $1^{st}$-stage SCI) to a second UE based on the resource scheduling. In step S820, the first UE may transmit a PSSCH (e.g., $2^{nd}$-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3 1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index - ceiling ($\log_2$ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling ($\log_2(N^{SL}_{subChannel})$) bits
- SCI format 1-A fields: frequency resource assignment, time resource assignment
- PSFCH-to-HARQ feedback timing indicator - ceiling ($\log_2 N_{fb\_timing}$) bits, where $N_{fb\_timing}$ is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

For example, the 1st-stage SCI format may include a SCI format 1-A and/or a SCI format 1-B, and the 2nd-stage SCI format may include a SCI format 2-A, a SCI format 2-B, a SCI format 2-C and/or a SCI format 2-D.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits
- Beta_offset indicator - 2 bits as provided by higher layer parameter sl-BetaOffsets2ndSCI
- Number of DMRS port - 1 bit
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 3
- CSI request - 1 bit

[Table 3]

| Value of Cast type indicator | Cast type |
|---|---|
| 00 | Broadcast |
| 01 | Groupcast when HARQ-ACK information includes ACK or NACK |

(continued)

| Value of Cast type indicator | Cast type |
|---|---|
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, a hybrid automatic repeat request (HARQ) procedure will be described.

For example, the SL HARQ feedback may be enabled for unicast. For example, the SL HARQ feedback may be enabled for groupcast. For example, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit negative acknowledgement (NACK) to the transmitting UE through a PSFCH. Otherwise, if the receiving UE decodes the PSCCH of which the target is the receiving UE and if the receiving UE successfully decodes the transport block related to the PSCCH, the receiving UE may not transmit positive acknowledgement (ACK) to the transmitting UE.

(2) Groupcast option 2: After the receiving UE decodes the PSCCH of which the target is the receiving UE, if the receiving UE fails in decoding of the transport block related to the PSCCH, the receiving UE may transmit NACK to the transmitting UE through the PSFCH. In addition, if the receiving UE decodes the PSCCH of which the target is the receiving UE and if the receiving UE successfully decodes the transport block related to the PSCCH, the receiving UE may transmit ACK to the transmitting UE through the PSFCH.

Hereinafter, UE procedure for reporting HARQ-ACK on sidelink will be described.

A UE can be indicated by an SCI format scheduling a PSSCH reception, in one or more sub-channels from a number of $N^{PSSCH}_{subch}$ sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot $t'^{SL}_k$ ($0 \le k < T'_{max}$) has a PSFCH transmission occasion resource if k mod $N^{PSFCH}_{PSSCH}$ = 0, where $t'^{SL}_k$ is a slot that belongs to the resource pool, $T'_{max}$ is a number of slots that belong to the resource pool within 10240 msec, and $N^{PSFCH}_{PSSCH}$ is provided by sl-PSFCH-Period-r16. A UE may be indicated by higher layers to not transmit a PSFCH in response to a PSSCH reception. If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of $M^{PSFCH}_{PRB,set}$ PRBs in a resource pool for PSFCH transmission in a PRB of the resource pool. For a number of $N_{subch}$ sub-channels for the resource pool, provided by sl-NumSubchannel, and a number of PSSCH slots associated with a PSFCH slot that is less than or equal to

$N^{PSFCH}_{PSSCH}$, the UE allocates the $[(i+j \cdot N^{PSFCH}_{PSSCH}) \cdot M^{PSFCH}_{subch,slot}, (i+1+j \cdot N^{PSFCH}_{PSSCH})M^{PSFCH}_{subch,slot}-1]$ PRBs from the $M^{PSFCH}_{PRB,set}$ PRBs to slot i among the PSSCH slots associated with the PSFCH slot and sub-channel j, where $M^{PSFCH}_{subch,slot} = M^{PSFCH}_{PRB,set}/(N_{subch} \cdot N^{PSFCH}_{PSSCH})$, $0 \leq i < N^{PSFCH}_{PSSCH}$, $0 \leq j \leq N_{subch}$, and the allocation starts in an ascending order of i and continues in an ascending order of j. The UE expects that $M^{PSFCH}_{PRB,set}$ is a multiple of $N_{subch} \cdot N^{PSFCH}_{PSSCH}$.

A UE determines a number of PSFCH resources available for multiplexing HARQ-ACK information in a PSFCH transmission as $R^{PSFCH}_{PRB,CS} = N^{PSFCH}_{type} \cdot M^{PSFCH}_{subch,slot} \cdot N^{PSFCH}_{CS}$ where $N^{PSFCH}_{CS}$ is a number of cyclic shift pairs for the resource pool and, based on an indication by higher layers,

- $N^{PSFCH}_{type} = 1$ and the $M^{PSFCH}_{subch,slot}$ PRBs are associated with the starting sub-channel of the corresponding PSSCH
- $N^{PSFCH}_{type} = N^{PSSCH}_{subch}$ and the $N^{PSSCH}_{subch} \cdot M^{PSFCH}_{subch,slot}$ PRBs are associated with one or more sub-channels from the $N^{PSSCH}_{subch}$ sub-channels of the corresponding PSSCH

The PSFCH resources are first indexed according to an ascending order of the PRB index, from the $N^{PSFCH}_{type} \cdot M^{PSFCH}_{subch,slot}$ PRBs, and then according to an ascending order of the cyclic shift pair index from the $N^{PSFCH}_{CS}$ cyclic shift pairs.

A UE determines an index of a PSFCH resource for a PSFCH transmission in response to a PSSCH reception as $(P_{ID} + M_{ID})$ mod $R^{PSFCH}_{PRB,CS}$ where $P_{ID}$ is a physical layer source ID provided by SCI format 2-A or 2-B scheduling the PSSCH reception, and $M_{ID}$ is the identity of the UE receiving the PSSCH as indicated by higher layers if the UE detects a SCI format 2-A with Cast type indicator field value of "01" ; otherwise, $M_{ID}$ is zero.

A UE determines a $m_0$ value, for computing a value of cyclic shift $\alpha$, from a cyclic shift pair index corresponding to a PSFCH resource index and from $N^{PSFCH}_{CS}$ using Table 4.

[Table 4]

| $N^{PSFCH}_{CS}$ | $m_0$ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

The UE applies one cyclic shift from a cyclic shift pair to a sequence used for the PSFCH transmission.

Hereinafter, UE procedure for determining the subset of resources to be reported to higher layers in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the slot $r''_i - T_3$, where $r''_i$ is the slot with the smallest slot index among $(r_0, r_1, r_2, ...)$ and $(r'_0, r'_1, r'_2, ...)$, and $T_3$ is equal to $T^{SL}_{proc,1}$. Herein, $T^{SL}_{proc,1}$ is defined as the number of slots based on SCS, where $\mu_{SL}$ is an SCS configuration of a SL BWP.

The following higher layer parameters affect this procedure:

- sl-SelectionWindowList: internal parameter $T_{2min}$ is set to the corresponding value from higher layer parameter sl-SelectionWindowList for the given value of $prio_{TX}$.
- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.
- sl-ResourceReservePeriodList
- sl-SensingWindow: internal parameter $T_0$ is defined as the number of slots corresponding to sl-SensingWindow msec.
- sl-TxPercentageList: internal parameter X for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

$(t'^{SL}_0, t'^{SL}_1, t'^{SL}_2, ...)$ denotes the set of slots which belongs to the sidelink resource pool.

For example, the UE may select a set of candidate resources ($S_A$) based on Table 5. For example, if resource (re) selection is triggered, the UE may select a set of candidate resources ($S_A$) based on Table 5. For example, if re-evaluation or pre-emption is triggered, the UE may select a set of candidate resources ($S_A$) based on Table 5.

[Table 5]

The following steps are used:

1) A candidate single-slot resource for transmission $R_{x,y}$ is defined as a set of $L_{subCH}$ contiguous sub-channels with sub-channel $x+j$ in slot $t'^{SL}_y$ where j = 0,...,$L_{subCH}$ - 1. The UE shall assume that any set of $L_{subCH}$ contiguous sub-channels included in the corresponding resource pool within the time interval $[n + T_1, n + T_2]$ correspond to one candidate single-slot resource, where

- selection of $T_1$ is up to UE implementation under $0 \leq T_1 \leq T^{SL}_{proc,1}$ , where $T^{SL}_{proc,1}$ is defined in slots in Table 8.1.4-2 where $\mu_{SL}$ is the SCS configuration of the SL BWP;

- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i, p_j)$ is set to the corresponding value of RSRP threshold indicated by the i-th field in *sl-Thres-RSRP-List,* where i = $p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.

- for any periodicity value allowed by the higher layer parameter *sl-ResourceReservePeriodList* and a hypothetical SCI format 1-A received in slot $t'^{SL}_m$ with *'Resource reservation period* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively;

b) the RSRP measurement performed, for the received SCI format 1-A, is higher than $Th(prio_{RX}, prio_{TX})$;

c) the SCI format received in slot $t'^{SL}_m$ or the same SCI format which, if and only if the *'Resource reservation period'* field is present in the received SCI format 1-A, is assumed to be received in slot(s) $t'^{SL}_{m+q \times P'_{rsvp\_RX}}$ determines the set of resource blocks and slots which overlaps with $R_{x,y+j \times P'_{rsvp\_TX}}$ for $q$=1, 2, ..., Q and j=0, 1, ..., $C_{resel}$ - 1. Here, $P'_{rsvp\_RX}$ is $P_{rsvp\_RX}$ converted to units of logical slots,

$Q = \left\lceil \frac{T_{scal}}{P_{rsvp\_RX}} \right\rceil$ if $P_{rsvp\_RX} < T_{scal}$ and $n' - m \le P'_{rsvp\_RX}$, where $t'^{SL}_{n'} = n$ if slot $n$ belongs to the set $\left( t'^{SL}_0, t'^{SL}_1, \ldots, t'^{SL}_{T'_{max}-1} \right)$, otherwise

slot $t'^{SL}_{n'}$ is the first slot after slot $n$ belonging to the set $\left( t'^{SL}_0, t'^{SL}_1, \ldots, t'^{SL}_{T'_{max}-1} \right)$; otherwise Q = *1*. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set $(r_0, r_1, r_2, ...)$ is not a member of $S_A$, then the UE shall report re-evaluation of the resource $r_i$ to higher layers.

If a resource $r'_i$ from the set $(r'_0, r'_1, r'_2, ...)$ meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and
- the associated priority $prio_{RX}$, satisfies one of the following conditions:
  - sl-PreemptionEnable is provided and is equal to 'enabled' and $prio_{TX} > prio_{RX}$
  - sl-PreemptionEnable is provided and is not equal to 'enabled', and $prio_{RX} < prio_{pre}$ and $prio_{TX} > prio_{RX}$

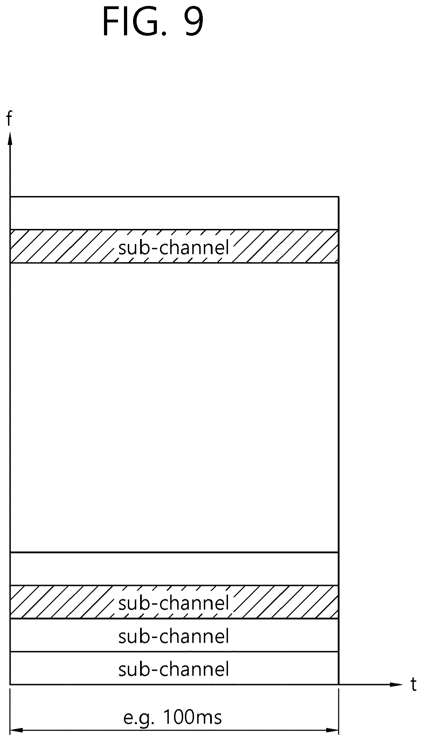

FIG. 9 shows a resource unit for CBR measurement, based on an embodiment of the present disclosure. The embodiment of FIG. 9 may be combined with various embodiments of the present disclosure.

Referring to FIG. 9, CBR may denote the number of sub-channels in which a measurement result value of a received signal strength indicator (RSSI) has a value greater than or equal to a pre-configured threshold as a result of measuring the RSSI by a UE on a sub-channel basis for a specific period (e.g., 100 ms). Alternatively, the CBR may denote a ratio of sub-channels having a value greater than or equal to a pre-configured threshold among sub-channels for a specific duration. For example, in the embodiment of FIG. 9, if it is assumed that a hatched sub-channel is a sub-channel having a value greater than or equal to a pre-configured threshold, the CBR may denote a ratio of the hatched sub-channels for a period of 100 ms. Additionally, the CBR may be reported to the base station.

For example, if a PSCCH and a PSSCH are multiplexed in a frequency domain, the UE may perform one CBR measurement for one resource pool. Herein, if a PSFCH resource is configured or pre-configured, the PSFCH resource may be excluded in the CBR measurement.

Further, congestion control considering a priority of traffic (e.g. packet) may be necessary. To this end, for example, the UE may measure a channel occupancy ratio (CR). Specifically, the UE may measure the CBR, and the UE may determine a maximum value CRlimitk of a channel occupancy ratio k (CRk) that can be occupied by traffic corresponding to each priority (e.g., k) based on the CBR. For example, the UE may derive the maximum value CRlimitk of the channel occupancy ratio with respect to a priority of each traffic, based on a predetermined table of CBR measurement values. For example, in case of traffic having a relatively high priority, the UE may derive a maximum value of a relatively great channel occupancy ratio. Thereafter, the UE may perform congestion control by restricting a total sum of channel occupancy ratios of traffic, of which a priority k is lower than i, to a value less than or equal to a specific value. Based on this method, the channel occupancy ratio may be more strictly restricted for traffic having a relatively low priority.

In addition thereto, the UE may perform SL congestion control by using a method of adjusting a level of transmit power, dropping a packet, determining whether retransmission is to be performed, adjusting a transmission RB size (MCS coordination), or the like.

Table 6 shows an example of SL CBR and SL RSSI.

[Table 6]

| SL CBR | |
|---|---|
| Definition | SL Channel Busy Ratio (SL CBR) measured in slot n is defined as the portion of sub-channels in the resource pool whose SL RSSI measured by the UE exceed a (pre-)configured threshold sensed over a |
| | CBR measurement window [n-a, n-1], wherein a is equal to 100 or $100 \cdot 2^{\mu}$ slots, according to higher layer parameter *sl-TimeWindowSizeCBR*. |
| Applicable for | RRC_IDLE intra-frequency, RRC_IDLE inter-frequency, RRC_CONNECTED intra-frequency, RRC_CONNECTED inter-frequency |
| SL RSSI | |
| Definition | Sidelink Received Signal Strength Indicator (SL RSSI) is defined as the linear average of the total received power (in [W]) observed in the configured sub-channel in OFDM symbols of a slot configured for PSCCH and PSSCH, starting from the 2nd OFDM symbol. For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| Applicable for | RRC_IDLE intra-frequency, RRC_IDLE inter-frequency, RRC_CONNECTED intra-frequency, RRC_CONNECTED inter-frequency |

Referring to Table 6, the slot index may be based on physical slot index.

Table 7 shows an example of SL channel occupancy ratio (CR).

[Table 7]

| Definition | Sidelink Channel Occupancy Ratio (SL CR) evaluated at slot n is defined as the total number of sub-channels used for its transmissions in slots [*n-a, n-1*] and granted in slots [*n, n+b*] divided by the total number of configured sub-channels in the transmission pool over [*n-a, n+b*]. |
|---|---|
| Applicable for | RRC_IDLE intra-frequency, RRC_IDLE inter-frequency, RRC_CONNECTED intra-frequency, RRC_CONNECTED inter-frequency |
| NOTE 1: a is a positive integer and b is 0 or a positive integer. a and b are determined by UE implementation with a+b+1 = 1000 or $1000 \cdot 2^{u}$ slots, according to higher layer parameter sl-TimeWindowSizeCR, b < (a+b+1)/2, and n+b shall not exceed the last transmission opportunity of the grant for the current transmission. NOTE 2: SL CR is evaluated for each (re)transmission. NOTE 3: In evaluating SL CR, the UE shall assume the transmission parameter used at slot n is reused according to the existing grant(s) in slot [n+1, n+b] without packet dropping. NOTE 4: The slot index is based on physical slot index. NOTE 5: SL CR can be computed per priority level NOTE 6: A resource is considered granted if it is a member of a selected sidelink grant. | |

Meanwhile, when performing sidelink communication, the UE may perform transmission and/or reception based on multiple panels and/or beam directions, and in this case, it may be necessary to define a method for managing spatial settings such as beam-related information or spatial domain transmission/reception filters.

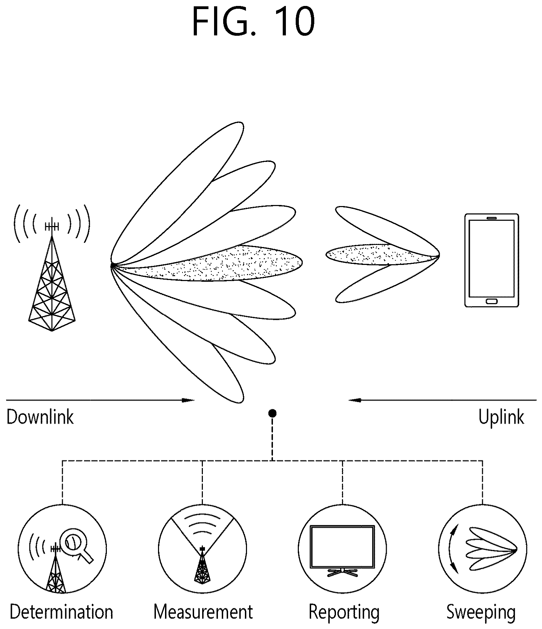

FIG. 10 shows beam management based on an embodiment of the present disclosure. The embodiment of FIG. 10 may be combined with various embodiments of the present disclosure.

Referring to FIG. 10, beam management may include beam determination, beam measurement, beam reporting, and/or beam sweeping. In the case of forming a beam using multiple antennas, a narrow antenna beam may be transmitted far in a specific direction, but may not cover the entire cell widely at once. Rather, if an antenna beam is formed in one direction, almost no antenna beam is formed in the other direction, so no signal may be transmitted. Therefore, in such cases, a transmitter or a receiver may transmit or receive data using beam forming, respectively. In this case, the transmitter or the receiver shall continuously update and manage the beam(s) used, which may be called beam management.

For example, the UE may perform the following operation-based sidelink FR2 (sidelink mmWave frequencies-based sidelink communication) operation.

- Beam sweeping operation: an operation that covers a spatial domain using transmit and/or receive beams for a certain time interval in a predefined manner
- Beam measurement operation: an operation that measures a reference signal (RS) transmitted by another device to find an RS whose measurement value is equal to or greater than a threshold
- Beam selection operation: an operation that selects the best beam (receive beam and/or transmit beam) based on the result of the beam measurement
- Beam reporting operation: an operation that reports the selected best beam to another device or the base station

Meanwhile, in downlink, a base station may indicate antenna port quasi-co-location (QCL) information to a UE through a transmission configuration indicator (TCI). Specifically, when receiving a downlink signal via 'typeD', the base station may configure/indicate whether the UE is to assume that a specific SSB or CSI-RS has the same spatial RX parameter or beam information. Meanwhile, in uplink, the base station may configure/indicate to the UE that a spatial-domain transmission filter or a spatial setting for PUSCH transmission is to follow a spatial setting used for a specific SRS transmission resource and/or PRACH transmission and/or downlink signal reception of the UE.

For example, the UE may transmit another CSI request to the same receiving UE prior to the end of the CSI reporting reception window and/or the CSI reporting reception time for the CSI request indicated by the UE, and/or the permission for such operation may be (pre-)configured and/or configured by PC5-RRC.

For example, the PSCCH/PSSCH receiving UE may perform single CSI reporting for multiple CSI requests received from the PSCCH/PSSCH transmitting UE, and/or the single CSI reporting may include CSI based on CSI measurement values for all or part of the multiple CSI requests received. For example, the PSCCH/PSSCH receiving UE may perform CSI reporting for part of CSI request(s) for multiple CSI requests received from the PSCCH/PSSCH transmitting UE. For example, the CSI and/or the CSI reporting for the part of CSI request(s) may be for optimal beam(s) or optimal TX spatial setting(s) and/or for large RI value(s) and/or for large CQI value(s) and/or for high spectral efficiency value(s) calculated based on RI and CQI, and/or each CSI reporting and/or each CSI may be reported together with information related to the TX beam and/or information related to the TX spatial setting and/or information related to the spatial RX parameter and/or CSI request information. For example, the CSI request ID may be information that is indicated together when the UE indicates the CSI request. For example, at least the CSI-RS may use different TX spatial settings for each CSI request ID.

For example, the TX UE may transmit SL CSI-RS through multiple symbols within a slot for a single PSCCH/PSSCH. For example, information related to the SL CSI-RS resource may be different (each independently (pre-)configured) according to PSFCH occasions, non-PSFCH occasions, or per slot (group). For example, SL CSI-RS in multiple symbols may be supported only in non-PSFCH occasions. For example, the UE may expect all REs within an RB and/or within an (allocated) subchannel to be used for SL CSI-RS. For example, the UE may expect SL CSI-RS (at least for beam management or TX spatial setting) to be mapped to the last symbol of the PSSCH. For example, SL CSI-RS (at least for beam management or TX spatial setting) may be TDMed with a region to which the PSSCH and/or the SL-SCH is mapped. SL CSI-RS (at least for beam management or TX spatial setting) may be mapped after the end of a region to which the PSSCH and/or the SL-SCH is mapped.

For example, the TX UE may change a TX spatial setting for different SL CSI-RS per symbol within a slot. For example, the RX UE may indicate/report a specific SL CSI-RS resource by distinguishing SL CSI-RS resources within a slot when performing CSI reporting. For example, the CSI to be reported may be for a good channel condition or an optimal beam.

For example, the TX UE may use the same TX spatial setting for different SL CSI-RS of multiple symbols within a slot. For example, the RX UE may change an RX spatial setting for different CSI-RS symbols. For example, the RX UE may perform CSI measurement for each (TX spatial setting, RX spatial setting)-pair. For example, the RX UE may report, to the TX UE, a CSI measurement result based on SL CSI-RS corresponding to at least one TX spatial setting and/or information related to the SL CSI-RS resource. For example, the RX UE may report, to the TX UE, a specific CSI measurement result among CSI measurements based on multiple RX spatial settings for a specific TX spatial setting. For example, it may be the one with the largest CQI value and/or the one with the largest RI value and/or the one with the highest spectral efficiency based on RI and CQI and/or the one with the highest (L1) signal-to-interference-plus-noise ratio (SINR).

For example, for CSI-RS transmission for multiple symbols, CSI-RS transmission with the same TX spatial setting and CSI-RS transmission with a different TX spatial setting may be configured in the form of a pattern through PC5-RRC between UEs, (pre-)configured for each resource pool, and/or the TX UE may indicate information related to the pattern to the RX UE. For example, in the case of a pattern for CSI-RS transmission for multiple symbols, CSI-RS resources with the same TX spatial setting may be preferentially concatenated or adjacent, and the TX spatial settings may be different between the CSI-RS resource groups. The advantage of this is that the number of times the TX UE changes its TX spatial settings when transmitting CSI-RS can be minimized. For example, in the case of a pattern for CSI-RS transmission for multiple symbols, CSI-RS resources with different TX spatial settings may be preferentially concatenated or adjacent, and the TX spatial setting may be identical across the CSI-RS resource groups. The advantage of this is that the number of times the RX UE changes its RX spatial settings when receiving CSI-RS can be minimized.

For example, a time gap and/or a transient period may exist between different TX spatial settings and/or between different RX spatial settings for CSI-RS transmission. For example, the transient period may exist outside of a CSI-RS symbol period.

Meanwhile, SL CSI-RS transmission (for beam management) may be transmitted without data, and/or the UE may perform resource (re)selection for SL CSI-RS transmission, and/or the UE may perform congestion control for SL CSI-RS transmission.

For example, a priority value for SL CSI-RS (for beam management and/or without data) may be a (pre-)configured value, and/or a value configured through PC5-RRC, and/or a priority value inherited from unicast data related to SL CSI-RS transmission, and/or a value determined by the UE, and/or a predefined value (e.g., a maximum allowed value or a minimum allowed value). For example, the value and/or the method for configuring the priority value may be different depending on before or after the PC5-RRC configuration and/or before, during, or after the establishment of the SL unicast link. For example, the value and/or the method for configuring the priority value may be different depending on the purpose of SL CSI-RS (e.g., initial beam pairing and/or beam maintenance and/or beam failure detection and/or beam failure recovery). For example, a priority value for the SL CSI-RS may be different between a transmission priority value and a reception priority value and/or may be pre-configured, PCS-RRC-configured, or determined for each of them. For example, a transmission priority value when (re)selecting a resource for SL CSI-RS transmission may be different from a reception priority value that other UEs refer to when avoiding a resource for SL CSI-RS.

For example, a packet delay budget (PDB) value for SL CSI-RS (for beam management and/or without data) may be a (pre-)configured value and/or a value configured through PC5-RRC and/or a priority value inherited from unicast data related to SL CSI-RS transmission and/or a value determined by the UE and/or a predefined value (e.g., T2_min). For example, the value and/or the method for configuring the PDB value may be different depending on before or after the PC5-RRC configuration and/or before, during, or after the establishment of the SL unicast link. For example, the value and/or the method for configuring the PDB value may be different depending on the purpose of SL CSI-RS (e.g., initial beam pairing and/or beam maintenance and/or beam failure detection and/or beam failure recovery).

For example, the number of allocated subchannels and/or the number of allocated PRBs for SL CSI-RS (for beam management and/or without data) may be a (pre-)configured value, and/or a value configured through PC5-RRC, and/or a priority value inherited from unicast data related to SL CSI-RS transmission, and/or a value determined by the UE, and/or a predefined value (e.g., a single subchannel or a single PRB). For example, the value and/or the method for configuring the number of allocated subchannels and/or the number of allocated PRBs may be different depending on before or after the PC5-RRC configuration and/or before, during, or after the establishment of the SL unicast link. For example, the value and/or the method for configuring the number of allocated subchannels and/or the number of allocated PRBs may be different depending on the purpose of SL CSI-RS (e.g., initial beam pairing and/or beam maintenance and/or beam failure detection and/or beam failure recovery).

For example, a resource reservation period and/or a resource reselection counter value for SL CSI-RS (for beam management and/or without data) may be a (pre-)configured value, and/or a value configured through PC5-RRC, and/or a priority value inherited from unicast data related to SL CSI-RS transmission, and/or a value determined by the UE, and/or a predefined value. For example, the value and/or the method for configuring the resource reservation period and/or the resource reselection counter value may be different depending on before or after the PC5-RRC configuration and/or before, during, or after the establishment of the SL unicast link. For example, the value and/or the method for configuring the resource reservation period and/or the resource reselection counter value may be different depending on the purpose of SL CSI-RS (e.g., initial beam pairing and/or beam maintenance and/or beam failure detection and/or beam failure recovery).

For example, depending on the congestion control level (e.g., CR value and/or CBR value) of the UE, whether to transmit SL CSI-RS may be restricted, and/or density may be restricted, and/or a transmit power value for SL CSI-RS may be restricted, and/or a TX spatial setting and/or an RX spatial setting corresponding to SL CSI-RS may be restricted, and/or whether reception for a TX spatial setting is allowed may be restricted, and/or a transmission scheme for SL CSI-RS (e.g., periodic and/or aperiodic and/or semi-persistent) may be restricted, and/or a BW for SL CSI-RS transmission may be restricted. For example, parameter(s) for the SL CSI-RS may be pre-configured depending on a CBR value range. For example, parameter(s) for the SL CSI-RS may be determined differently depending on a comparison according to a CR value and a CR limit value.

For example, in mode 1 operation, the base station may indicate information related to a CSI-RS pattern to the TX UE. For example, the base station may indicate the information related to the CSI-RS pattern to the UE through an RRC configuration and/or an indication of DCI. For example, the indication of DCI may use a DCI format (DCI format 3_0) used for PSCCH/PSSCH scheduling, and/or whether a CSI-RS pattern is indicated or information for data transmission (e.g., HARQ process number, NDI) is indicated may be distinguished based on a flag field value in a DCI format and/or a combination of specific field values and/or CRC masking for a PDCCH (e.g., a third RNTI).

For example, the UE may transmit a single SL CSI-RS or multiple SL CSI-RSs without data, in which case the UE may perform a resource (re)selection process for SL CSI-RS transmission regardless of data.

For example, when the UE performs resource (re)selection for SL CSI-RS transmission, a subchannel size may be a single PRB or multiple PRBs, and/or may be configured to be smaller than and/or equal to a subchannel size. For example, when the UE performs resource (re)selection for SL CSI-RS transmission, a subchannel size and/or location may be equal to and/or a subset of or smaller than the number and/or region of PRBs occupied/allocated for a PSCCH. In other words, a SL CSI-RS resource may still be structured to be confined to PSCCH PRBs.

For example, candidate resource reservation period value(s) for SL CSI-RS transmission may differ from candidate resource reservation period value(s) for PSCCH/PSSCH transmission, and may be separately (pre-)configured and/or configured through PC5-RRC.

For example, a priority value for SL CSI-RS may be different per resource pool and/or per SL CSI-RS resource set and/or per transmission spatial setting and/or per reception spatial setting and/or per beam management stage (initial beam pairing and/or beam maintenance and/or beam failure detection and/or recovery), and may be (pre-)configured and/or configured through PC5-RRC. For example, a priority value for SL CSI-RS, etc. may be determined based on a unicast link establishment-related message related to SL CSI-RS transmission (e.g., direct communication request (DCR) or a service type targeted by unicast link) and/or inherit the associated value.

For example, a resource for SL CSI-RS transmissions may not be reselected through resource re-evaluation and/or pre-emption. For example, a priority threshold for pre-emption for SL CSI-RS transmission may be separately (pre-) configured. For example, the priority threshold may be different between a case where SL CSI-RS pre-empts another SL channel and a case where it is pre-empted.

For example, if one or more SL CSI-RS resources/transmissions overlap in whole or in part with a PSFCH symbol region and/or a TX-RX switching symbol region between a PSSCH and a PSFCH, the UE may skip SL CSI-RS transmission for the overlapping region, and/or the UE may not expect (e.g., through SL CSI-RS pattern adjustment) that the SL CSI-RS resources/transmissions overlap with the PSFCH symbol region and/or the TX-RX switching symbol region between the PSSCH and the PSFCH.

For example, if a UE transmits a PSCCH and/or $2^{nd}$ SCI and/or SL CSI-RS within a slot without data transmission, an identifier for the UE transmitting the SL CSI-RS and/or an identifier for a UE receiving the SL CSI-RS may be transmitted through the PSCCH.

For example, if a UE transmits a PSCCH and/or $2^{nd}$ SCI and/or SL CSI-RS within a slot without data transmission, the $2^{nd}$ SCI may be mapped to the remaining region of a PSSCH resource after mapping the PSCCH, PSSCH DMRS, the SL CSI-RS, and/or PT-RS. For example, the $2^{nd}$ SCI mapping start symbol may be the symbol following the AGC symbol, the second SL-available symbol within the slot, or the first SL- available symbol, regardless of the presence or absence of the PSSCH DMRS and its pattern. For example, if a UE transmits a PSCCH and/or $2^{nd}$ SCI and/or SL CSI-RS within a slot without data transmission, an MCS field and/or a beta offset indicator and/or a PSFCH overhead indicator and/or an additional MCS table indicator and/or a DMRS pattern indicator indicated through $1^{st}$ SCI may be reserved or used for other purposes (e.g., as an identifier for the SL CSI-RS transmitting UE and/or receiving UE, and/or a SL CSI-RS pattern indicator, and/or a beam-related information indicator).

For example, if a UE transmits a PSCCH and/or $2^{nd}$ SCI and/or SL CSI-RS within a slot without data transmission, channel estimation for the $2^{nd}$ SCI may be performed based on the SL CSI-RS, and/or a channel on which the $2^{nd}$ SCI is transmitted/carried may be inferred from a channel on which the SL CSI-RS is transmitted/carried in the same slot and/or in the same frequency region. For example, if a UE transmits a PSCCH and/or $2^{nd}$ SCI and/or SL CSI-RS within a slot without data transmission, an RSRP measurement value for a reserved resource for this may be measured based on the SL CSI-RS. The method may differ depending on whether legacy UEs are present within a resource pool, whether SL CSI-RS transmission without data is present within a resource pool, or whether SL CSI-RS transmission without data is allowed within a resource pool. For example, in the case of a resource pool where legacy UEs or Rel-16/Rel-17 UEs coexist, even if a PSCCH and/or $2^{nd}$ SCI and/or SL CSI-RS within a slot without data transmission is transmitted, PSSCH DMRS and/or PT-RS may be included, channel estimation for the 2nd SCI may be based on the PSSCH DMRS and/or the PT-RS, and/or an RSRP measurement value for a reserved resource for this may be performed based on PSCCH DMRS and/or the PSSCH DMRS (depending on (pre-)configuration), and the 2nd SCI transmission may be performed together. For example, in the case of a resource pool where legacy UEs or Rel-16/Rel-17 UEs do not coexist, if a PSCCH and/or 2nd SCI and/or SL CSI-RS within a slot without data transmission is transmitted, PSSCH DMRS and/or PT-RS may not be included, channel estimation for the 2nd SCI may be based on SL CSI-RS, and/or an RSRP measurement value for a reserved resource for this may be performed based on PSCCH DMRS and/or the SL CSI-RS (depending on (pre-)configuration), and identifier information may be transmitted through the PSCCH without the 2nd SCI transmission.

For example, for (periodic and/or semi-persistent) SL CSI-RS transmission, if it is determined that PSSCH PT-RS transmitted together with the SL CSI-RS overlaps on the same RE, the UE may skip PSSCH transmission including the SL CSI-RS and the corresponding PSCCH and/or 2nd SCI transmission at that time.

For example, for (periodic and/or semi-persistent) SL CSI-RS transmission, if it is determined that PSSCH PT-RS transmitted together with the SL CSI-RS overlaps on the same RE, the UE may continue SL CSI-RS transmission at that time and/or skip PT-RS transmission.

For example, if a UE transmits SL CSI-RS without data within the same slot and/or only with 2nd SCI, PT-RS transmission may be skipped regardless of the number of allocated PRBs and/or an MCS value (indicated in 1st SCI).

For example, if a UE transmits SL CSI-RS without data within the same slot and/or only with 2nd SCI, the UE may select a transmission resource without ignoring or considering the HARQ round trip time (RTT) constraint between SL CSI-RS transmission slots when performing resource (re)selection (even if PSFCH resources are (pre-)configured within a resource pool).

For example, performing a resource (re)selection procedure for SL CSI-RS transmission resource(s) may differ in terms of applicability and method depending on whether SL CSI-RS transmission is periodic and/or semi-persistent and/or aperiodic. For example, SL CSI-RS transmission resource selection using a resource (re)selection procedure may be limited to the case of aperiodic SL CSI-RS transmission.

For example, performing a resource (re)selection procedure for SL CSI-RS transmission resource(s) may be triggered by the PHY layer of the UE, and a resource (re)selection request may be transferred from the PHY layer to the higher layer.

Meanwhile, SL CSI-RS transmission without data may be transmitted before and/or after unicast link establishment-related messages, such as a direct communication request (DCR). For example, when performing a resource (re) selection procedure for a PSCCH/PSSCH (including the DCR), the UE may select, together with it, a transmission resource for a corresponding or associated SL CSI-RS (without data within a slot).

The various schemes of the present disclosure may be applied differently per unicast session (group) and/or per cast type and/or per transmission priority value and/or per reception priority value and/or per SL transmission with SL HARQ-ACK feedback enabled/disabled and/or per SL HARQ-ACK feedback option and/or per QoS parameter and/or per (remaining) PDB and/or per congestion control level and/or per (transmission and/or reception) resource pool and/or per UE's mobility-related information (e.g., speed, velocity, direction, acceleration, position, height, etc.) and/or per sidelink transmission or reception and/or per HARQ process and/or per beam process and/or per source ID and/or per destination ID and/or per TB. For example, in the embodiment(s) of the present disclosure, the unit of (pre-)configuration may be configured in the form of the above different combinations. For example, in the embodiment(s) of the present disclosure, parameter indication and management through a PSCCH and/or a PSSCH may be performed in the unit of the different combinations described above.

Meanwhile, in the next-generation system, in order to detect and/or declare a sidelink beam failure situation, periodic transmission of a specific RS (e.g., S-SSB and/or PSBCH DMRS and/or SL CSI-RS) may be considered. For example, resources for the specific RS may be (pre-)configured and/or configured through PC5-RRC and/or derived by the UE based on parameter(s). For example, resource information in frequency and/or time domain for SL CSI-RS and/or SL CSI-RS (transmit) port information and/or a SL CSI-RS sequence generation ID and/or a random seed and/or a cyclic shift application value for a SL CSI-RS sequence and/or a time and/or frequency orthogonal cover code (OCC) sequence to be applied to a SL CSI-RS sequence may be (pre-)configured per resource pool and/or configured through PC5-RRC and/or derived by the UE based on parameter(s). For example, the parameter(s) may include an (L1 or L2 or application) source ID of UE-1 and/or an (L1 or L2 or application) source ID of UE-2 and/or an (L1 or L2 or application) destination ID for UE-1 and/or a PC5-RRC link ID and/or TX spatial setting information and/or RX spatial setting information for the unicast link between UE-1 and UE-2.

For example, if a SL CSI-RS resource is (pre-)configured and/or before the PC5-RRC link between UEs is established, the number of transmit and/or receive ports for SL CSI-RS may be fixed to 1.

Meanwhile, if different TX spatial settings(s) are applied to multiple SL RSs within a slot, received power at the receiving UE may fluctuate, which may cause an AGC problem.

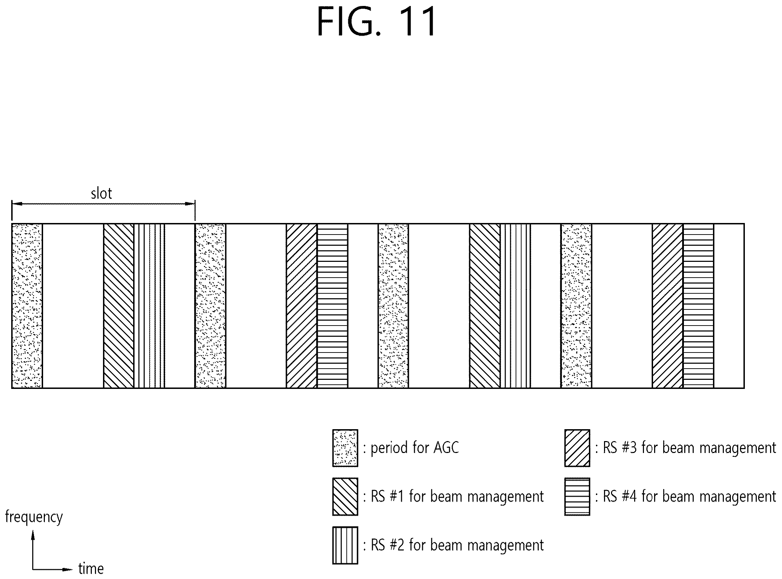

FIG. 11 shows an example of an AGC problem caused by transmission of reference signals for beam management. In the embodiment of FIG. 11, it is assumed that reference signals for beam management are transmitted based on different TX spatial settings within a slot. In this case, due to reference signals transmitted based on different TX spatial settings, variation in received power may occur at the reception side, which may cause the AGC problem. For example, if CSI-RS transmission is performed using different TX spatial settings for each symbol within a slot, received power of another receiving UE in that slot may vary, which may cause the AGC problem. Therefore, the following operation may be proposed to alleviate the AGC problem.

For example, if the UE transmits SL RS for beam management in the same slot using different TX spatial settings, the UE may map the SL RS to all frequency regions within a resource pool and/or a SL BWP and/or transmit the SL RS, and/or the UE may indicate corresponding information to another UE (through SCI). For example, if the UE transmits SL RS for beam management in the same slot using different TX spatial settings, the UE may occupy all frequency regions within a resource pool and/or a SL BWP, and/or the UE may indicate related-occupancy information through SCI.

For example, when performing resource (re)selection, the UE may avoid and/or deprioritize frequency resources within a slot where another UE transmits SL RS using different TX spatial settings in the same slot (e.g., recognized through SCI reception) or may transmit the SL RS (e.g., a candidate region configured by (pre-)configuration or PC5-RRC).

For example, a set of slots in which SL RS for beam management using different TX spatial settings is allowed or can be transmitted in the same slot may be (pre-)configured, configured through PC5-RRC, and/or indicated (through a PSCCH and/or a PSSCH) by another UE to the UE.

For example, a set of slots in which SL RS for beam management using different TX spatial settings is allowed or can be transmitted in the same slot may be configured or pre-configured to the UE. For example, a set of slots in which SL RS for beam management using different TX spatial settings is allowed or can be transmitted in the same slot may be configured between UEs through PC5-RRC. For example, the UE may receive (through a PSCCH (e.g., 1st SCI) and/or a PSSCH (e.g., 2nd SCI, MAC CE)) information related to a set of slots in which SL RS for beam management using different TX spatial settings is allowed or can be transmitted in the same slot from another UE.

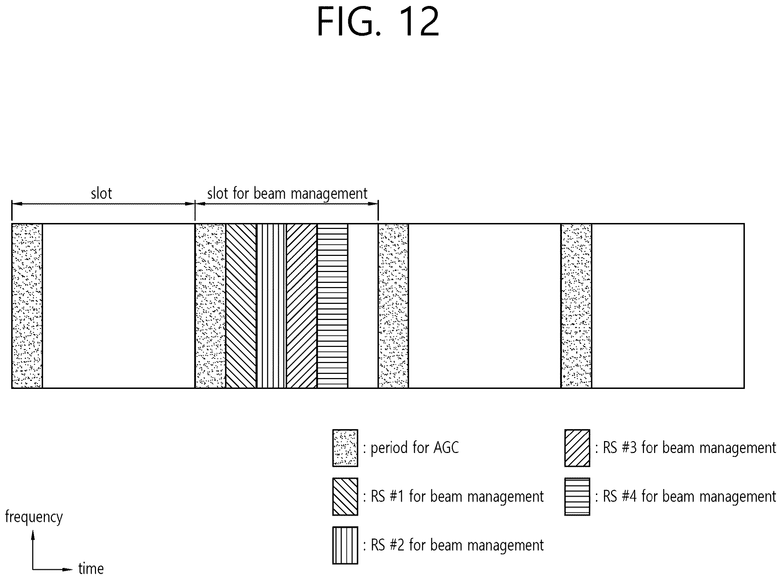

FIG. 12 shows an example of a set of slots in which SL RS for beam management using different TX spatial settings is allowed or can be transmitted in the same slot, based on an embodiment of the present disclosure. The embodiment of FIG. 12 may be combined with various embodiments of the present disclosure.

Referring to FIG. 12, a set of slots (e.g., the second slot in the embodiment of FIG. 12 ) in which SL RS for beam management using different TX spatial settings is allowed or can be transmitted in the same slot may be configured. In this case, transmission and reception of the reference signal for beam management may be allowed only within slot(s) included in the set of slots, and the AGC issue may not occur within the remaining slots. Furthermore, the UE may perform an AGC operation in slot(s) in which transmission and reception of the reference signal for beam management are allowed, considering the spatial settings of the reference signal for beam management. Through this, the UE can efficiently perform beam management without the AGC issue.

While the embodiment(s) of the present disclosure has described an RS for beam failure detection, the concepts of the present disclosure can be extended and applied to other candidate RSs. For convenience, the embodiment(s) of the present disclosure has been described based on SL CSI-RS, but the concepts of the present disclosure can also be extended and applied to a third RS.

In the embodiment(s) of the present disclosure, spatial settings and/or transmission configuration indication (TCI) information and/or quasi-colocation (QCL) information may refer to each other and/or may be interpreted as being replaced with beam-related information, beam direction, spatial-domain transmission or reception filters, etc.

In the embodiment(s) of the present disclosure, that the spatial setting information for transmission is the same may mean that the spatial domain TX filter of the UE is the same for two different transmission signals. In the embodiment(s) of the present disclosure, that the spatial setting information for reception is the same may mean that two different reception signals have a QCL 'Type D' relationship and/or use the same spatial RX parameter.

In the embodiment(s) of the present disclosure, (pre-)configuration may refer to pre-configuration (through signaling from a server or at the time of manufacturing), configuration from a base station, and/or configuration through PC5-RRC between UEs.

The various methods of the present disclosure may be applied differently for each SL channel. The various methods of the present disclosure may be applied differently depending on the type of information contained in the SL channel.

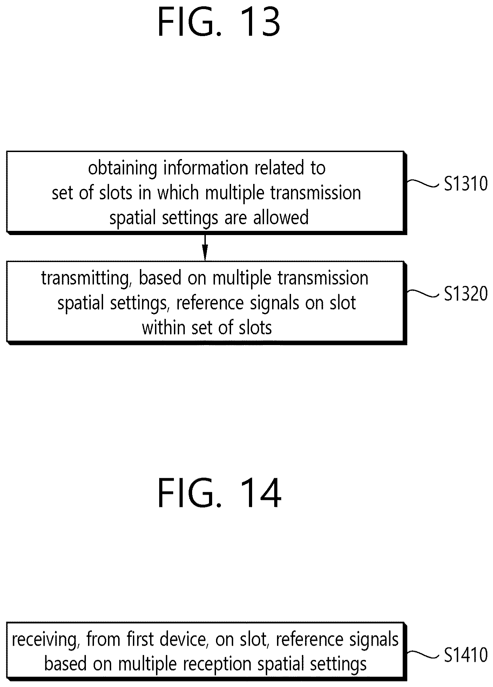

FIG. 13 shows a method for a first device to perform wireless communication, based on an embodiment of the present disclosure. The embodiment of FIG. 13 may be combined with various embodiments of the present disclosure.

Referring to FIG. 13, in step S1310, the first device may obtain information related to a set of slots in which multiple transmission spatial settings are allowed. In step S 1320, the first device may transmit, based on the multiple transmission spatial settings, a plurality of reference signals on a slot within the set of slots. For example, the first device may be allowed to transmit the plurality of reference signals on the slot within the set of slots based on the multiple transmission spatial settings.

For example, the first device may not be allowed to transmit the plurality of reference signals on a slot outside the set of slots based on the multiple transmission spatial settings.

For example, each of the plurality of reference signals may be transmitted based on a corresponding transmission spatial setting among the multiple transmission spatial settings.

For example, the plurality of reference signals may be reference signals for beam management.

For example, information related to the set of slots in which the multiple transmission spatial settings are allowed may be received from a second device through PC5 radio resource control (RRC).

For example, information related to the set of slots in which the multiple transmission spatial settings are allowed may be received from a second device based on at least one of first sidelink control information (SCI) on a physical sidelink control channel (PSCCH) or second SCI on a physical sidelink shared channel (PSSCH).

For example, information related to the set of slots in which the multiple transmission spatial settings are allowed may be pre-configured or configured for the first device.

For example, the plurality of reference signals transmitted on the slot within the set of slots based on the multiple transmission spatial settings may be mapped to all frequency regions within a resource pool.

For example, the plurality of reference signals transmitted on the slot within the set of slots based on the multiple transmission spatial settings may be mapped to all frequency regions within a bandwidth part (BWP).

For example, information representing that the plurality of reference signals transmitted based on the multiple transmission spatial settings are mapped to all frequency regions within a resource pool or a bandwidth part (BWP) may be transmitted by the first device to a second device. For example, the information representing that the plurality of reference signals transmitted based on the multiple transmission spatial settings are mapped to all frequency regions within the resource pool or the BWP may be transmitted by the first device to the second device based on at least one of first sidelink control information (SCI) on a physical sidelink control channel (PSCCH) or second SCI on a physical sidelink shared channel (PSSCH).

For example, a resource within the slot for transmitting the plurality of reference signals may be selected based on sensing. For example, a priority value related to pre-emption for the resource may be configured independently from a priority value related to pre-emption for a resource for physical sidelink shared channel (PSSCH) transmission.

The proposed method can be applied to devices based on various embodiments of the present disclosure. First, the processor 102 of the first device 100 may obtain information related to a set of slots in which multiple transmission spatial settings are allowed. In addition, the processor 102 of the first device 100 may control the transceiver 106 to transmit, based on the multiple transmission spatial settings, a plurality of reference signals on a slot within the set of slots. For example, the first device may be allowed to transmit the plurality of reference signals on the slot within the set of slots based on the multiple transmission spatial settings.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: obtaining information related to a set of slots in which multiple transmission spatial settings are allowed; and transmitting, based on the multiple transmission spatial settings, a plurality of reference signals on a slot within the set of slots. For example, the first device may be allowed to transmit the plurality of reference signals on the slot within the set of slots based on the multiple transmission spatial settings.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: obtaining information related to a set of slots in which multiple transmission spatial settings are allowed; and transmitting, based on the multiple transmission spatial settings, a plurality of reference signals on a slot within the set of slots. For example, the first device may be allowed to transmit the plurality of reference signals on the slot within the set of slots based on the multiple transmission spatial settings.

Based on an embodiment of the present disclosure, a non-transitory computer-readable storage medium storing instructions may be provided. For example, the instructions, when executed, may cause a first device to perform operations comprising: obtaining information related to a set of slots in which multiple transmission spatial settings are allowed; and transmitting, based on the multiple transmission spatial settings, a plurality of reference signals on a slot within the set of slots. For example, the first device may be allowed to transmit the plurality of reference signals on the slot within the set of slots based on the multiple transmission spatial settings.

FIG. 14 shows a method for a second device to perform wireless communication, based on an embodiment of the present disclosure. The embodiment of FIG. 14 may be combined with various embodiments of the present disclosure.

Referring to FIG. 14, in step S1410, the second device may receive, from a first device, on a slot, a plurality of reference signals based on multiple reception spatial settings. For example, information related to a set of slots in which the multiple reception spatial settings are allowed may be configured for the second device. For example, the second device may be allowed to receive the plurality of reference signals on the slot within the set of slots based on the multiple reception spatial settings.

For example, the second device may not be allowed to receive the plurality of reference signals on a slot outside the set of slots based on the multiple reception spatial settings.

For example, each of the plurality of reference signals may be received based on a corresponding reception spatial setting among the multiple reception spatial settings.

For example, the plurality of reference signals may be reference signals for beam management.

For example, information related to the set of slots in which the multiple reception spatial settings are allowed may be transmitted to the first device through PC5 radio resource control (RRC).

For example, information related to the set of slots in which the multiple reception spatial settings are allowed may be received from the first device through PC5 radio resource control (RRC).

For example, information related to the set of slots in which the multiple reception spatial settings are allowed may be transmitted to the first device based on at least one of first sidelink control information (SCI) on a physical sidelink control channel (PSCCH) or second SCI on a physical sidelink shared channel (PSSCH).

For example, information related to the set of slots in which the multiple reception spatial settings are allowed may be received from the first device based on at least one of first sidelink control information (SCI) on a physical sidelink control channel (PSCCH) or second SCI on a physical sidelink shared channel (PSSCH).

For example, the plurality of reference signals received on the slot within the set of slots based on the multiple reception spatial settings may be mapped to all frequency regions within a resource pool.

For example, the plurality of reference signals received on the slot within the set of slots based on the multiple reception spatial settings may be mapped to all frequency regions within a bandwidth part (BWP).

For example, information representing that the plurality of reference signals received based on the multiple reception spatial settings are mapped to all frequency regions within a resource pool or a bandwidth part (BWP) may be received from the first device. For example, the information representing that the plurality of reference signals received based on the multiple reception spatial settings are mapped to all frequency regions within the resource pool or the BWP may be received from the first device based on at least one of first sidelink control information (SCI) on a physical sidelink control channel (PSCCH) or second SCI on a physical sidelink shared channel (PSSCH).

For example, a resource within the slot for transmitting the plurality of reference signals may be selected based on sensing. For example, a priority value related to pre-emption for the resource may be configured independently from a priority value related to pre-emption for a resource for physical sidelink shared channel (PSSCH) transmission.

The proposed method can be applied to devices based on various embodiments of the present disclosure. First, the processor 202 of the second device 200 may control the transceiver 206 to receive, from a first device, on a slot, a plurality of reference signals based on multiple reception spatial settings. For example, information related to a set of slots in which the multiple reception spatial settings are allowed may be configured for the second device. For example, the second device may be allowed to receive the plurality of reference signals on the slot within the set of slots based on the multiple reception spatial settings.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: receiving, from a first device, on a slot, a plurality of reference signals based on multiple reception spatial settings. For example, information related to a set of slots in which the multiple reception spatial settings are allowed may be configured for the second device. For example, the second device may be allowed to receive the plurality of reference signals on the slot within the set of slots based on the multiple reception spatial settings.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: receiving, from a first device, on a slot, a plurality of reference signals based on multiple reception spatial settings. For example, information related to a set of slots in which the multiple reception spatial settings are allowed may be configured for the second device. For example, the second device may be allowed to receive the plurality of reference signals on the slot within the set of slots based on the multiple reception spatial settings.

Based on an embodiment of the present disclosure, a non-transitory computer-readable storage medium storing instructions may be provided. For example, the instructions, when executed, may cause a second device to perform operations comprising: receiving, from a first device, on a slot, a plurality of reference signals based on multiple reception spatial settings. For example, information related to a set of slots in which the multiple reception spatial settings are allowed may be configured for the second device. For example, the second device may be allowed to receive the plurality of reference signals on the slot within the set of slots based on the multiple reception spatial settings.

Based on various embodiments of the present disclosure, a set of slots in which multiple transmission spatial settings or multiple reception spatial settings can be used may be pre-configured. Through this, even if multiple transmission spatial settings are used within a slot, the AGC problem at another receiving UE side can be alleviated.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

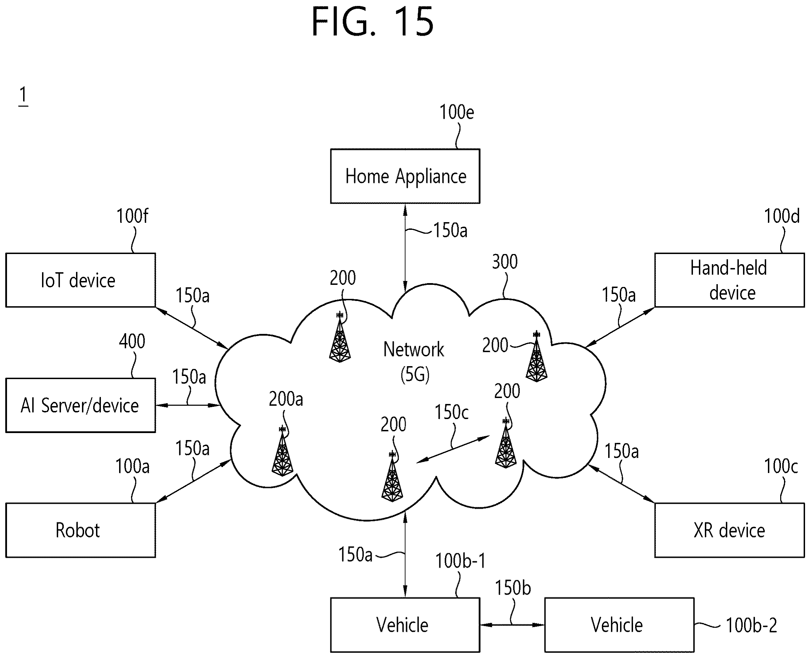

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

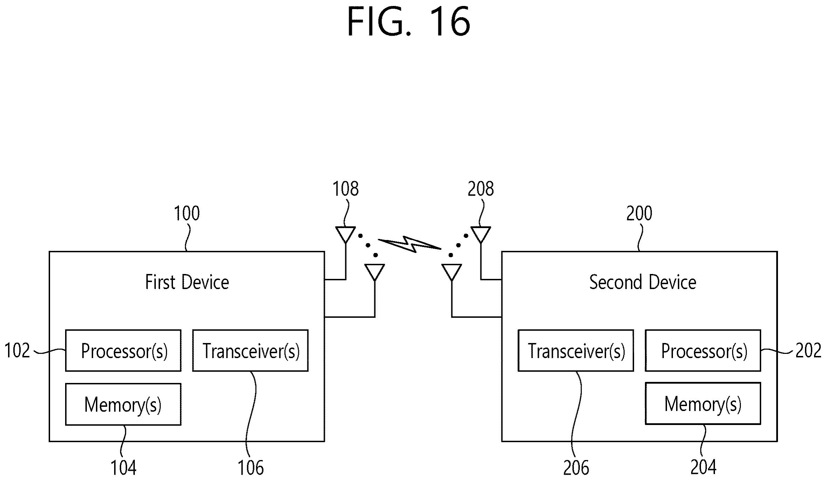

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

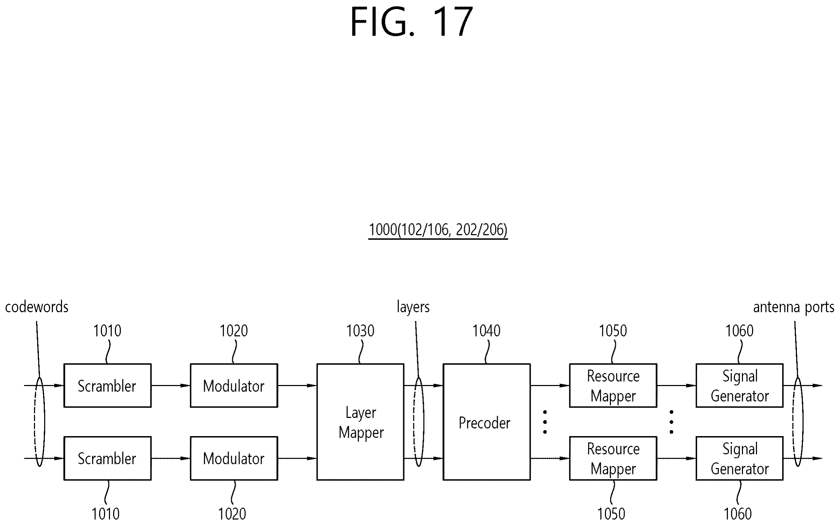

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs $z$ of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

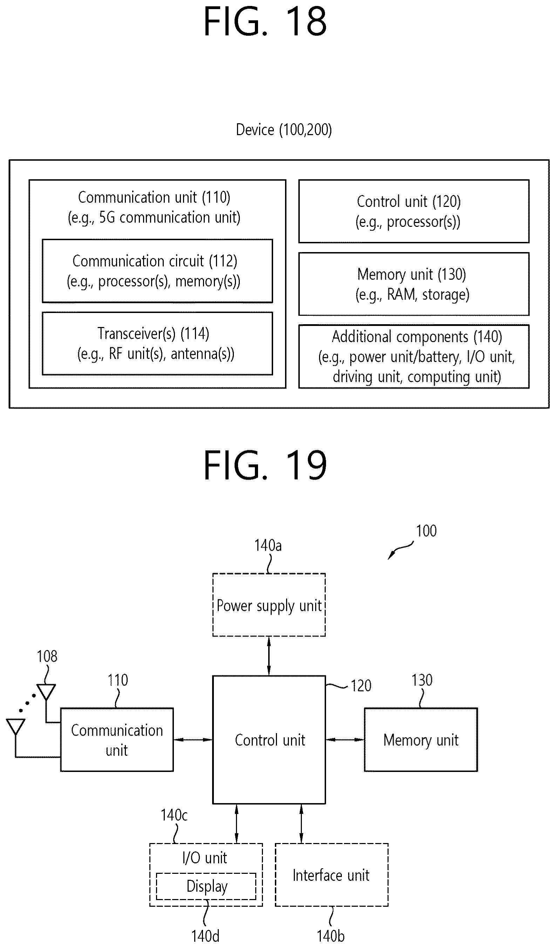

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

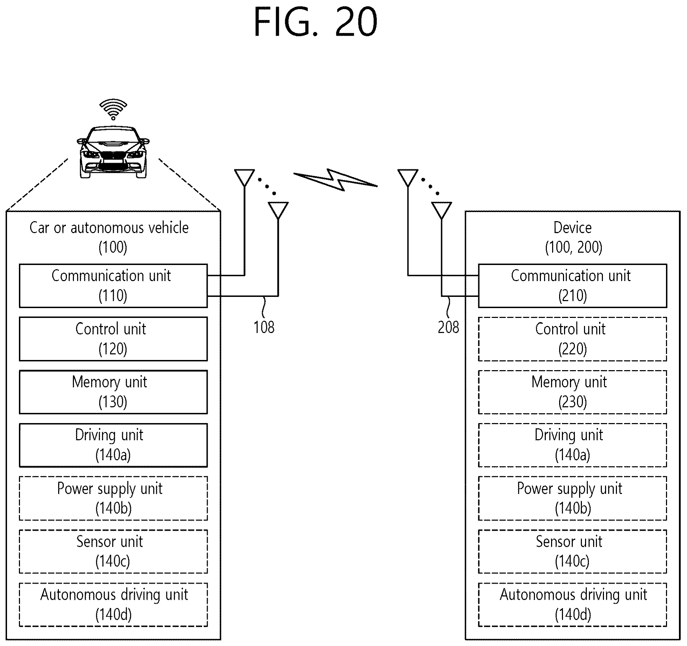

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

   obtaining information related to a set of slots in which multiple transmission spatial settings are allowed; and
   transmitting, based on the multiple transmission spatial settings, a plurality of reference signals on a slot within the set of slots,
   wherein the first device is allowed to transmit the plurality of reference signals on the slot within the set of slots based on the multiple transmission spatial settings.

2. The method of claim 1, wherein the first device is not allowed to transmit the plurality of reference signals on a slot outside the set of slots based on the multiple transmission spatial settings.

3. The method of claim 1, wherein each of the plurality of reference signals is transmitted based on a corresponding transmission spatial setting among the multiple transmission spatial settings.

4. The method of claim 1, wherein the plurality of reference signals are reference signals for beam management.

5. The method of claim 1, wherein information related to the set of slots in which the multiple transmission spatial settings are allowed is received from a second device through PCS radio resource control (RRC).

6. The method of claim 1, wherein information related to the set of slots in which the multiple transmission spatial settings are allowed is received from a second device based on at least one of first sidelink control information (SCI) on a physical sidelink control channel (PSCCH) or second SCI on a physical sidelink shared channel (PSSCH).

7. The method of claim 1, wherein information related to the set of slots in which the multiple transmission spatial settings are allowed is pre-configured or configured for the first device.

8. The method of claim 1, wherein the plurality of reference signals transmitted on the slot within the set of slots based on the multiple transmission spatial settings are mapped to all frequency regions within a resource pool.

9. The method of claim 1, wherein the plurality of reference signals transmitted on the slot within the set of slots based on the multiple transmission spatial settings are mapped to all frequency regions within a bandwidth part (BWP).

10. The method of claim 1, wherein information representing that the plurality of reference signals transmitted based on the multiple transmission spatial settings are mapped to all frequency regions within a resource pool or a bandwidth part (BWP) is transmitted by the first device to a second device.

11. The method of claim 10, wherein the information representing that the plurality of reference signals transmitted based on the multiple transmission spatial settings are mapped to all frequency regions within the resource pool or the BWP is transmitted by the first device to the second device based on at least one of first sidelink control information (SCI) on a physical sidelink control channel (PSCCH) or second SCI on a physical sidelink shared channel (PSSCH).

12. The method of claim 1, wherein a resource within the slot for transmitting the plurality of reference signals are selected based on sensing.

13. The method of claim 12, wherein a priority value related to pre-emption for the resource is configured independently from a priority value related to pre-emption for a resource for physical sidelink shared channel (PSSCH) transmission.

14. A first device adapted to perform wireless communication, the first device comprising:

   at least one transceiver;
   at least one processor; and

at least one memory connected to the at least one processor and storing instructions that, based on being executed by the at least one processor, cause the first device to perform operations comprising:

obtaining information related to a set of slots in which multiple transmission spatial settings are allowed; and transmitting, based on the multiple transmission spatial settings, a plurality of reference signals on a slot within the set of slots,
wherein the first device is allowed to transmit the plurality of reference signals on the slot within the set of slots based on the multiple transmission spatial settings.

15. A processing device adapted to control a first device, the processing device comprising:

at least one processor; and
at least one memory connected to the at least one processor and storing instructions that, based on being executed by the at least one processor, cause the first device to perform operations comprising:

obtaining information related to a set of slots in which multiple transmission spatial settings are allowed; and transmitting, based on the multiple transmission spatial settings, a plurality of reference signals on a slot within the set of slots,
wherein the first device is allowed to transmit the plurality of reference signals on the slot within the set of slots based on the multiple transmission spatial settings.

16. A non-transitory computer-readable storage medium storing instructions that, when executed, cause a first device to perform operations comprising:

obtaining information related to a set of slots in which multiple transmission spatial settings are allowed; and transmitting, based on the multiple transmission spatial settings, a plurality of reference signals on a slot within the set of slots,
wherein the first device is allowed to transmit the plurality of reference signals on the slot within the set of slots based on the multiple transmission spatial settings.

17. A method for performing wireless communication by a second device, the method comprising:

receiving, from a first device, on a slot, a plurality of reference signals based on multiple reception spatial settings,
wherein information related to a set of slots in which the multiple reception spatial settings are allowed is configured for the second device, and
wherein the second device is allowed to receive the plurality of reference signals on the slot within the set of slots based on the multiple reception spatial settings.

18. A second device adapted to perform wireless communication, the second device comprising:

at least one transceiver;
at least one processor; and
at least one memory connected to the at least one processor and storing instructions that, based on being executed by the at least one processor, cause the second device to perform operations comprising:

receiving, from a first device, on a slot, a plurality of reference signals based on multiple reception spatial settings,
wherein information related to a set of slots in which the multiple reception spatial settings are allowed is configured for the second device, and
wherein the second device is allowed to receive the plurality of reference signals on the slot within the set of slots based on the multiple reception spatial settings.

19. A processing device adapted to control a second device, the processing device comprising:

at least one processor; and
at least one memory connected to the at least one processor and storing instructions that, based on being executed by the at least one processor, cause the second device to perform operations comprising:

receiving, from a first device, on a slot, a plurality of reference signals based on multiple reception spatial settings,

wherein information related to a set of slots in which the multiple reception spatial settings are allowed is configured for the second device, and

wherein the second device is allowed to receive the plurality of reference signals on the slot within the set of slots based on the multiple reception spatial settings.

20. A non-transitory computer-readable storage medium storing instructions that, when executed, cause a second device to perform operations comprising:

receiving, from a first device, on a slot, a plurality of reference signals based on multiple reception spatial settings,

wherein information related to a set of slots in which the multiple reception spatial settings are allowed is configured for the second device, and

wherein the second device is allowed to receive the plurality of reference signals on the slot within the set of slots based on the multiple reception spatial settings.

# FIG. 1

Touch
Smell
Five Senses
Taste
Hear
Sight

sCell-APs
sCell-UE
sCell-UE
Dense sCell-RAN
sCell-APs
sCell-APs
sCell-UE
sCell-UE

Drone network

M2M & M2H comunication

eHealth remote monitoring

BCI and AI

3D virtual cordination
virtual remote assistance
New virtual world
3D Story virtualization
3D gaming

MR
AR
M-UE
M-UE

Ground/satellite integration

M-UE

Robotics & automation

UM MIMO BS

SDN

FSO communication

UAV BS
UE
UAV Controller
network

UM-MIMO BS

FSO backhaul

VLC

Smart City

Underwater communication

VR

Smart Home

VLC
Autonomous vehicle

EP 4 668 608 A1

# FIG. 2

| | Radio | Microwave | | Infrared | Visible | Ultraviolet | X-Ray | Gamma-Ray |

mmWave | Terahertz

| Wavelength | $10^8\,\mathrm{m}$ | 1m | 10mm | 1mm | 0.1mm | 700nm | 390nm | 10nm | 0.01nm |

Radiation Type

| Frequency | 3 Hz | 300 MHz | 30 GHz | 300 GHz | 3 THz | 430 THz | 730 THz | 30 PHz | 30 EHz |

| Mega : $10^6$ | Giga : $10^9$ | Tera : $10^{12}$ | Peta : $10^{15}$ | Exa : $10^{18}$ |

EP 4 668 608 A1

# FIG. 3

Satellite
(or UAS platform)

Service
link

Feeder link

Data network

Gateway

User
Equipments

Beam foot
print

Field of view of the satellite
(or UAS platform)

EP 4 668 608 A1

FIG. 4

# FIG. 5

(a)

(b)

# FIG. 6

A carrier
(up to 3300 subcarriers,
i.e., 275 RBs)

A BWP

1RB=12 subcarriers

Resource grid

1 RE

1subcarrier

1 symbol

l=0 • • •

k=0

# FIG. 7

PRB N3

$N_{BWP,\,2}^{size}$

PRB 1

PRB 0

PRB N2

$N_{BWP,\,1}^{size}$

PRB 1

PRB 0

Carrier
Bandwidth

$N_{BWP,\,2}^{start}$

PRB N1

$N_{BWP,\,0}^{size}$

PRB 1

PRB 0

$N_{BWP,\,1}^{start}$

$N_{BWP,\,0}^{start}$

CRB 0

Freq.

Time

PRB 0 (Point A) in reference resource block

# FIG. 8

BS | first UE | second UE | first UE | second UE

resource scheduling S800

PSCCH S810

PSSCH S820

PSFCH S830

PUCCH/PUSCH S840

PSCCH S810

PSSCH S820

PSFCH S830

(a)

(b)

# FIG. 9

# FIG. 10

Downlink

Uplink

Determination     Measurement     Reporting     Sweeping

# FIG. 11

slot

: period for AGC    : RS #3 for beam management

: RS #1 for beam management    : RS #4 for beam management

: RS #2 for beam management

frequency

time

# FIG. 12

slot | slot for beam management

frequency

time

: period for AGC          : RS #3 for beam management

: RS #1 for beam management          : RS #4 for beam management

: RS #2 for beam management

EP 4 668 608 A1

# FIG. 13

obtaining information related to
set of slots in which multiple transmission
spatial settings are allowed
~ S1310

transmitting, based on multiple transmission
spatial settings, reference signals on slot
within set of slots
~ S1320

# FIG. 14

receiving, from first device, on slot, reference signals
based on multiple reception spatial settings
~ S1410

# FIG. 15

EP 4 668 608 A1

# FIG. 16

# FIG. 17

EP 4 668 608 A1

1000(102/106, 202/206)

# FIG. 18

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 19

100

140a

Power supply unit

108

110

Communication
unit

120

Control unit

130

Memory unit

140c

I/O unit

Display

140d

Interface unit

140b

# FIG. 20

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| | International application No. |
|---|---|
| | **PCT/KR2024/002073** |

| A. | CLASSIFICATION OF SUBJECT MATTER |
|---|---|

**H04B 7/06**(2006.01)i; **H04W 76/14**(2018.01)i; **H04W 24/08**(2009.01)i; **H04L 5/00**(2006.01)i; **H04W 92/18**(2009.01)i

According to International Patent Classification (IPC) or to both national classification and IPC

| B. | FIELDS SEARCHED |
|---|---|

Minimum documentation searched (classification system followed by classification symbols)

H04B 7/06(2006.01); H04B 7/08(2006.01); H04L 1/18(2006.01); H04L 5/00(2006.01); H04W 16/28(2009.01); H04W 28/26(2009.01); H04W 72/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전송 공간 세팅(transmit spatial setting), 참조 신호(reference signal), 빔 관리(beam management)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0165726 A (LG ELECTRONICS INC.) 15 December 2022 (2022-12-15)<br>See paragraphs [0002], [0009], [0075], [0101], [0103]-[0117], [0188] and [0197]; and figure 12. | 1,3,5-7,12,14-20 |
| Y | | 4 |
| A | | 2,8-11,13 |
| Y | KR 10-2022-0150279 A (LG ELECTRONICS INC.) 10 November 2022 (2022-11-10)<br>See paragraph [0131]. | 4 |
| A | US 2022-0038921 A1 (WU, Keying et al.) 03 February 2022 (2022-02-03)<br>See paragraphs [0214]-[0310]; and figure 1. | 1-20 |
| A | WO 2022-084484 A1 (FRAUNHOFER-GESELLSCHAFT ZUR FÖRDERUNG DER ANGEWANDTEN FORSCHUNG E.V.) 28 April 2022 (2022-04-28)<br>See claim 1. | 1-20 |

| ✓ Further documents are listed in the continuation of Box C. | ✓ See patent family annex. |
|---|---|

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 May 2024** | **17 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 668 608 A1**

## INTERNATIONAL SEARCH REPORT

International application No.

**PCT/KR2024/002073**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022-232726 A1 (QUALCOMM INCORPORATED) 03 November 2022 (2022-11-03)<br>See claims 1-4. | 1-20 |

Form PCT/ISA/210 (second sheet) (July 2022)

**INTERNATIONAL SEARCH REPORT**
Information on patent family members

International application No.

**PCT/KR2024/002073**

| Patent document cited in search report | | | Publication date (day/month/year) | Patent family member(s) | | | Publication date (day/month/year) |
|---|---|---|---|---|---|---|---|
| KR | 10-2022-0165726 | A | 15 December 2022 | CN | 115362728 | A | 18 November 2022 |
| | | | | EP | 4099773 | A1 | 07 December 2022 |
| | | | | JP | 2023-521980 | A | 26 May 2023 |
| | | | | KR | 10-2023-0128400 | A | 04 September 2023 |
| | | | | KR | 10-2635332 | B1 | 13 February 2024 |
| | | | | US | 11582723 | B2 | 14 February 2023 |
| | | | | US | 11770804 | B2 | 26 September 2023 |
| | | | | US | 2022-0232525 | A1 | 21 July 2022 |
| | | | | US | 2022-0240296 | A1 | 28 July 2022 |
| | | | | US | 2023-0156668 | A1 | 18 May 2023 |
| | | | | WO | 2021-206527 | A1 | 14 October 2021 |
| | | | | WO | 2021-206529 | A1 | 14 October 2021 |
| KR | 10-2022-0150279 | A | 10 November 2022 | CN | 115244875 | A | 25 October 2022 |
| | | | | CN | 115244875 | B | 10 November 2023 |
| | | | | EP | 4117205 | A1 | 11 January 2023 |
| | | | | JP | 2023-512311 | A | 24 March 2023 |
| | | | | US | 11943036 | B2 | 26 March 2024 |
| | | | | US | 2023-0052430 | A1 | 16 February 2023 |
| | | | | US | 2023-0198601 | A1 | 22 June 2023 |
| | | | | WO | 2021-177782 | A1 | 10 September 2021 |
| US | 2022-0038921 | A1 | 03 February 2022 | AU | 2020-286173 | B1 | 22 July 2021 |
| | | | | AU | 2021-353687 | A1 | 07 April 2022 |
| | | | | CN | 111091106 | A | 01 May 2020 |
| | | | | CN | 111169790 | A | 19 May 2020 |
| | | | | CN | 113207094 | A | 03 August 2021 |
| WO | 2022-084484 | A1 | 28 April 2022 | EP | 3989458 | A1 | 27 April 2022 |
| | | | | EP | 4233193 | A1 | 30 August 2023 |
| | | | | KR | 10-2023-0098602 | A | 04 July 2023 |
| | | | | US | 2023-0403108 | A1 | 14 December 2023 |
| WO | 2022-232726 | A1 | 03 November 2022 | BR | 112023021792 | A2 | 26 December 2023 |
| | | | | CN | 117223249 | A | 12 December 2023 |
| | | | | EP | 4331163 | A1 | 06 March 2024 |
| | | | | KR | 10-2024-0004327 | A | 11 January 2024 |
| | | | | US | 11924127 | B2 | 05 March 2024 |
| | | | | US | 2022-0353031 | A1 | 03 November 2022 |

Form PCT/ISA/210 (patent family annex) (July 2022)